# EUROPEAN PATENT APPLICATION

(11) **EP 1 944 764 A2**
(43) Date of publication of application: **16.07.2008**
(21) Application number: 07113970.3
(22) Date of filing: 07.08.2007
(51) Int. Cl.: G11B 20/00

(54) **Apparatus for receiving digital contents and method thereof**

(30) Priority: 12.01.2007 KR 20070004012
(71) Applicant: Samsung Electronics Co., Ltd., Suwon-si, Gyeonggi-do 442-742 (KR)
(72) Inventor: Choi, Jung-hwa, Gyeonggi-do (KR)
(74) Representative: Brandon, Paul Laurence

(57) **Abstract**

An apparatus (1000, 2000) for receiving a digital content, and a method having the same are provided. The apparatus for receiving the digital content includes a plurality of receivers (100) which receive identification information and data from a plurality of transmitting apparatus; a plurality of authenticators (200) which generate authentication keys by using the identification information received through the plurality of receivers; and a decoder (600) which decodes the data received from the plurality of receivers by using an authentication key of the authentication keys generated by the plurality of authenticators. Accordingly, waiting time is reduced in converting an input signal.

## Description

### BACKGROUND OF THE INVENTION

### Field of the Invention:

Apparatus and methods consistent with the present invention relate to receiving digital content.

### Description of the Related Art:

As the interest increases in digital content, a digital versatile disc (DVD) as recording media to record and to reproduce a high quality-image, and high-definition digital televisions (TVs) have been increasingly developed.

A DVD apparatus, such as a DVD player and a DVD recorder is used to record or reproduce the image on the DVD by connecting to the TV, and also connect a plurality of DVD apparatus to a single TV.

An interface, such as digital visual interface (DVI) or high definition multimedia interface (HDMI) transmitting data between the DVD device and the TV, has been standardized.

Digital Visual Interface (DVI) is a technology to compress / decompress a moving image, and it is designed by digital display working group (DDWG). The HDMI is a broadcast standard to protect multimedia content in HDTV, and is the first multimedia interface to transmit an uncompressed digital audio and video.

The digital devices supporting HDMI and DVI provide the high-definition digital audio and video, and support a high bandwidth digital content protection (HDCP) to prevent replicating the content.

The digital apparatuses supporting HDMI and DVI transmit and receive audio/video (A/V) data, apparatus information, and a command for controlling, through Transition Minimized Differential Signaling (TMDS), a Display Data Channel (DDC), and Consumer Electronics Control (CEC). A/V data is transmitted and received through the TMDS, and Extended Display Identification Data (EDID) is transmitted and received through the DDC.

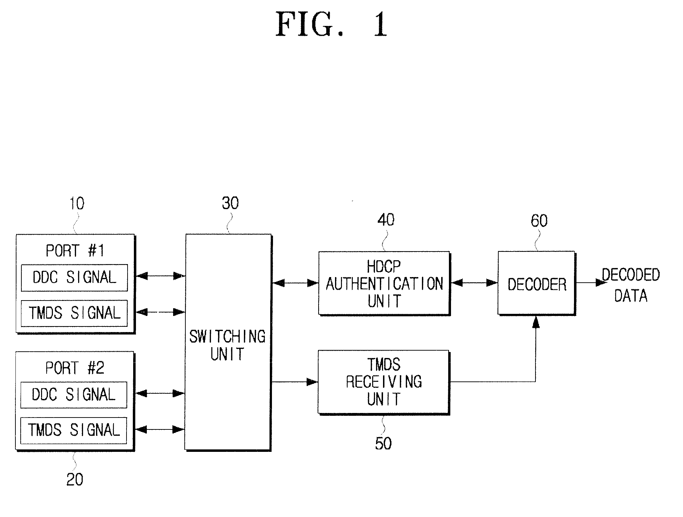

FIG. 1 is a block diagram of a related art digital apparatus to perform HDCP authentication.

FIG. 1 illustrates a receiving side of the digital apparatus having two ports. The receiving side of the digital apparatus comprises a port #1 (10), a port #2 (20), a switching unit 30, an HDCP authentication unit 40, a TMDS receiving unit 50, and a decoder 60.

The port #1 (10) and the port #2 (20) receive a DDC signal and a TMDS signal, respectively, and the switching unit 30 switches one of the signals received through the port #1 (10) and the port #2 (20). That is, the switching unit 30 switches the plurality of DDC signals and the plurality of TMDS signals.

One of the DDC signals is transmitted to the HDCP authenticator 40, and one of the TMDS signals is transmitted to the TMDS receiver 50. Accordingly, the signal received from one of the port #1 (10) and the port #2 (20) is decoded and output.

As illustrated in FIG. 1, for the receiving digital apparatus to change the input source, the switching unit 30 switches to a proper port among the ports, and the HDCP authentication unit 40 receives a corresponding DDC signal and authenticates the DDC signal.

Because the switching unit 30 switches both the DDC signal and the TMDS signal, and due to a time requirement for the HDCP authentication and additional mute time, there is a problem in that a long time is required when the input signal is changed.

### SUMMARY OF THE INVENTION

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Preferred embodiments of the present invention aim to provide a digital content receiving apparatus and method to reduce a time required for authenticating a digital content when an input signal is converted, by authenticating respectively input signals input through a plurality of input ports at a plurality of authenticators.

According to an aspect of the present invention, there is provided a digital content receiving apparatus comprises a plurality of receivers which receive respective identification information, and data from a plurality of transmitting apparatus; a plurality of authenticators which generate an authentication key by using the identification information received through the plurality of receivers; and a decoder which decodes one of data received from the plurality of receivers by using one of authentication keys generated by the plurality of authenticators.

The data received from the plurality of receivers may be one of DVI data and HDMI data.

The plurality of authenticators may perform HDCP authentication.

The identification information may be received through a DDC line, and the data may be received through a TMDS line.

The identification information may be EDID.

The number of authenticators may correspond to the number of receivers.

The digital content receiving apparatus may further comprise a switching unit which switches data received through the plurality of receivers; and a selector which selects one authentication key from among the authentication keys generated by the plurality of authenticators, wherein the decoder may decode data switched by the switching unit using the authentication key received from the selector.

The selector may select one authentication key from among the authentication keys generated by the plurality of authenticators according to the TMDS signal switched by the switching unit.

The digital content receiving apparatus may further comprise a storage unit which stores the authentication key generated by the plurality of authenticators.

A digital content receiving apparatus may further comprise receiving respectively identification information and data from a plurality of transmitting apparatuses; generating an authentication key using the received identification information; and decoding one of the received data by using one of the authentication keys generated by the plurality of authenticators.

The identification information may be received through DDC line, and the data is received through TMDS line.

The digital content receiving apparatus may further comprise the selecting one of the received data; and the selecting one of the generated authentication keys, wherein decoding may decode the selected data using the selected authentication key.

The selecting the authentication key may select the authentication key corresponding to the selected data.

The digital content receiving apparatus may further comprise the receiving respective identification information and data from the plurality of receivers; the selecting one of the received data; the generating the authentication key by using the identification information corresponding to the selected data; and decoding the selected data by using the generated authentication key.

The identification information may be received through DDC line, and the data are received through the TMDS line.

Further features of the present invention are set out in the appended claims.

### BRIEF DESCRIPTION OF THE DRAWINGS

The present invention will become apparent and more readily appreciated from the following description of the exemplary embodiments, taken in conjunction with the accompany drawings of which:

FIG. 1 is a block diagram of a related art digital apparatus to perform HDCP authentication.

FIG. 2 is a block diagram of an apparatus for receiving digital content according to an exemplary embodiment of the present invention.

FIG. 3 is a block diagram of an apparatus for receiving digital content according to another exemplary embodiment of the present invention.

FIG. 4 is a flow chart illustrating a method for receiving digital content according to an exemplary embodiment of the present invention.

FIG. 5 a flow chart illustrating a method for receiving digital content according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

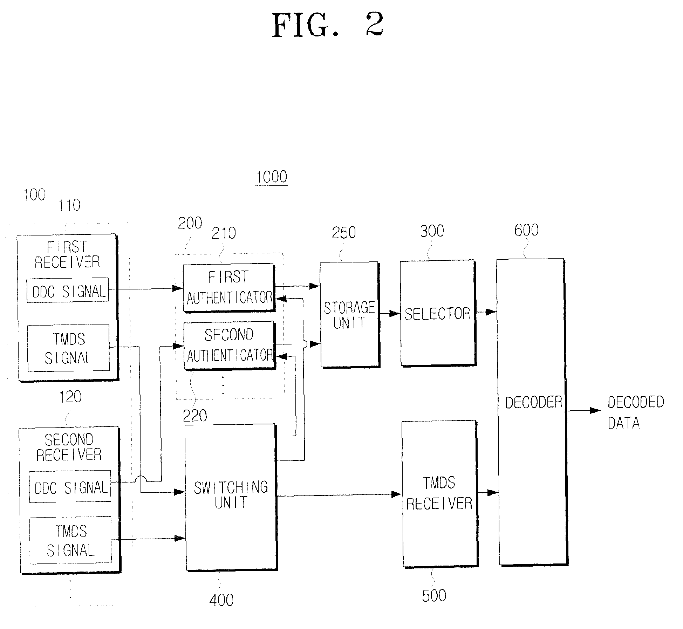

FIG. 2 is a block diagram of a digital content receiving apparatus according to an exemplary embodiment of the present invention.

Referring to FIG. 2, the digital content receiving apparatus 1000 may comprise a plurality of receivers 100, a plurality of authenticators 200, a storage unit 250, a selector 300, a switching unit 400, a TMDS receiver 500, and a decoder 600.

The digital content receiving apparatus 1000 of FIG. 2 supports a DVI or an HDMI, and the digital content receiving apparatus 1000 is connected to a plurality of digital content transmitting apparatuses (not shown). The digital content receiving apparatus 1000 may be a conventional digital TV, and the digital content transmitting apparatus may be an external apparatus such as a DVD player, or a DVD recorder.

The plurality of receivers 100 receive identification information, and data from the plurality of digital content transmitting apparatuses which is connected to the digital content receiving apparatus 1000. The number of receivers 100 corresponds to the number of digital content transmitting apparatuses which are connectable to the digital content receiving apparatuses. The plurality of receivers 100 may be ports through which a DVI or HDMI cable is connected to the digital content receiving apparatus 1000.

In an exemplary embodiment of the present invention, the plurality of receivers 100 may comprise a first receiver 110 and a second receiver 120, however, the number of the digital content receivers 100 is not limited to two and may change as necessary. The first receiver 110 and the second receiver 120 receive a DDC signal and a TMDS signal, respectively, from the digital content transmitting apparatuses.

The identification information received by the first receiver 110 and the second receiver 120 is EDID. The EDID is received through a DDC line, so it is referred to as a DDC signal.

Data received at the first receiver 110 and the second receiver 120 include video data and audio data. The data is received through a TMDS line and is referred to as TMDS signals. Conventionally, the TMDS signal includes a video signal when using the DVI, and includes a video signal and an audio signal when using the HDMI.

The plurality of authenticators 200 generate an authentication key by using the respective DDC signals received through the plurality of receivers 100. The number of authenticators 200 corresponds to the number of receivers 100. The plurality of the receivers 100 may comprise the first receiver 110 and the second receiver 120 according to which the plurality of authenticators 200 may comprise the first authenticator 210 and the second authenticator 220, according to an exemplary embodiment of the present invention.

The foregoing is merely an example given for convenience of description, and it is unnecessary to limit the number of the plurality of the authenticators 200. If the number of receivers 100 corresponds to the number of authenticators 200, the number may be freely modified within the constraints of the location where the digital content receiving apparatus 1000 is installed.

The first authenticator 210 receives the DDC signal from the first receiver 110, and outputs an authentication key generated using the received DDC signal to the storage unit 250. The second authenticator 220 also receives the DDC signal from the second receiver 120, and outputs an authentication key generated using the received DDC signal to the storage unit 250.

The first authenticator 210 and the second authenticator 220 perform the HDCP authentication. HDCP authentication is well known to those skilled in the art, such that a more detailed description is omitted here for the sake of brevity.

The storage unit 250 stores the authentication keys which are generated by the first authenticator 210 and the second authenticator 220. The storage unit 250 may store the plurality of authentication keys, and may provide the stored authentication keys to the selector 300.

The selector 300 selectively outputs one authentication key from among the authentication keys which are generated by the plurality of authenticators 200 including the first authenticator 210 and the second authenticator 220. The selector 300 selects the authentication key corresponding to the TMDS signal output from the switching unit 400 according to the TMDS signal switched by the switching unit 400.

If the authentication keys generated by the first authenticator 210 and the second authenticator 220 are stored on the storage unit 250, the selector 300 retrieves the authentication key which corresponds to the TMDS signal from the storage unit 250, and outputs the retrieved authentication key.

The switching unit 400 switches the plurality of the TMDS signals received through the plurality of receivers 100 including the first receiver 110 and the second receiver 120, and transmits one TMDS signal, which is switched at the switching unit 400, from among the plurality of TMDS signals to the TMDS receiver 500.

The switching unit 400 selects the first receiver 110 or the second receiver 120, which provides the input signal to the digital content receiving apparatus 1000 according to the request of the user, from among the plurality of the receivers 100.

The switching unit 400 selects the first receiver 110 or the second receiver 120 from among the plurality of the receivers 100 according to the request of a user, and then may provide the selected receiver to the first authenticator 210 or the second authenticator 220. The only authenticator which receives the selection result from the switching unit 400 can generate the authentication key.

The TMDS receiver 500 receives one TMDS signal, which is switched by the switching unit 400, from among the plurality of TMDS signals, the received TMDS signal is converted into a transistor and transistor logic (TTL) signal, and the converted signal is transmitted to the decoder 600.

The decoder 600 receives one authentication key selected by the selector 300, and one TMDS signal switched by the switching unit 400, from the TMDS receiver 500. The decoder 600 decodes one TMDS signal by using the authentication key, and outputs the decoded data. The decoded data may be a video signal, or video and audio signals.

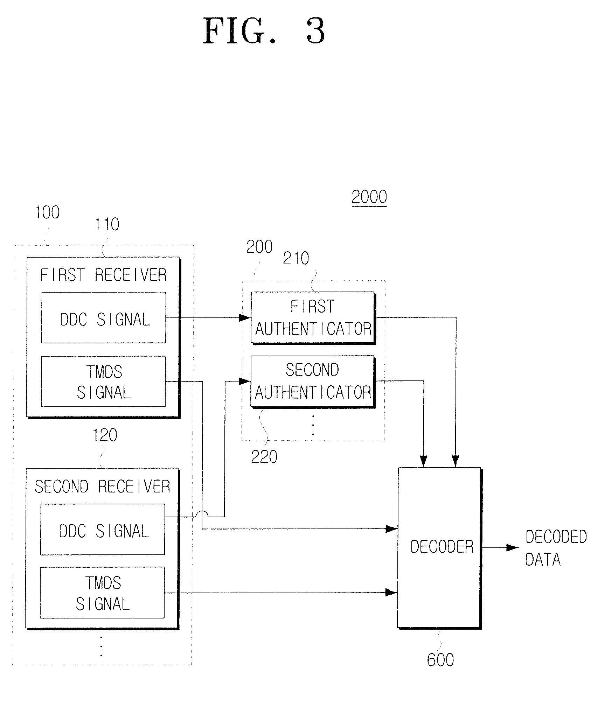

FIG. 3 is a block diagram of a digital content receiving apparatus according to another exemplary embodiment of the present invention.

The digital content receiving apparatus 2000 of FIG. 3 comprises a plurality of receivers 100, a plurality of authenticators 200, a storage unit 250, a selector 300, a switching unit 400, a TMDS receiver 500, and a decoder 600. However, the digital content receiving apparatus 1000 of FIG. 3 may comprise a plurality of receivers 100, a plurality of authenticators 200, and a decoder 600.

Since the plurality of receivers 100, the plurality of authenticators 200, and the decoder 600 of FIG. 3 perform the same function as the equivalent components shown in FIG. 2, the same reference numerals are used in FIG. 3.

The plurality of receivers 100 comprise a first receiver 110 and a second receiver 120. The first receiver 110 and the second receiver 120 may be connected to different digital content transmitters, such that the first receiver 110 receives a DDC signal and the second receiver 120 receives a TMDS signal from the corresponding digital content transmitting apparatus. In the present exemplary embodiment, the plurality of receivers 100 comprise the first receiver 110 and the second receiver 120 for convenience of description, but this is merely for illustration purposes, and the number of the receivers may be modified.

The plurality of authenticators 200 comprise a first authenticator 210 and a second authenticator 220. The first authenticator 210 generates an authentication key using the DDC signal received from the first receiver 110, and the second authenticator 220 generates an authentication key using the DDC signal received from the second receiver 120. The first authenticator 210 and the second authenticator 220 correspond one to one to the first receiver 110 and the second receiver 120, respectively.

The decoder 600 decodes one of the TMDS signals transmitted from the first receiver 110 and the second receiver 120 by using one authentication key generated by the first authenticator 210 or the second authenticator 220, and outputs the decoded TMDS signal. Herein, the decoder 600 may use the authentication key corresponding to the TMDS signal to be decoded.

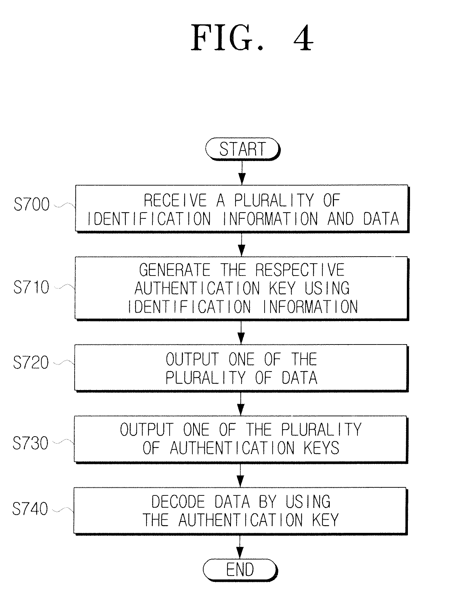

FIG. 4 is a flow chart illustrating a digital content receiving method according to an exemplary embodiment of the present invention.

The first receiver 110 and the second receiver 120 respectively receive identification information, that is the DDC signal, and data, that is, the TMDS signal, from the digital content transmitting apparatus, which is connected to each receiver (S700).

The first authenticator 210 receives the DDC signal from the first receiver 110 and generates the authentication key using the received DDC signal, and the second authenticator 220 receives the DDC signal from the second receiver 120 and generates the authentication key using the received DDC signal (S710).

The switching unit 400 switches one TMDS signal from among the TMDS signals received through the first receiver 110 and the second receiver 120, and outputs the switched signal (S720).

The selector 300 selects one authentication key corresponding to the TMDS signal output from the switching unit 400 from among the authentication keys generated from the first authenticator 210 and the second authenticator 220, and outputs the selected authentication key (S730).

The decoder 600 receives the switched TMDS signal from the TMDS receiver 500, and receives the selected authentication key from the selector 300. The decoder 600 decodes the TMDS signal received from the TMDS receiver 500 using the authentication key received from the selector 300 (S740). The decoded data may be a video signal, or video and audio signals.

If the plurality of the receivers 100 receive respective input signals, the respective HDCP authentication is performed by the plurality of authenticators 200 corresponding to the plurality of the receivers 100. As a result, waiting time is reduced in converting the input.

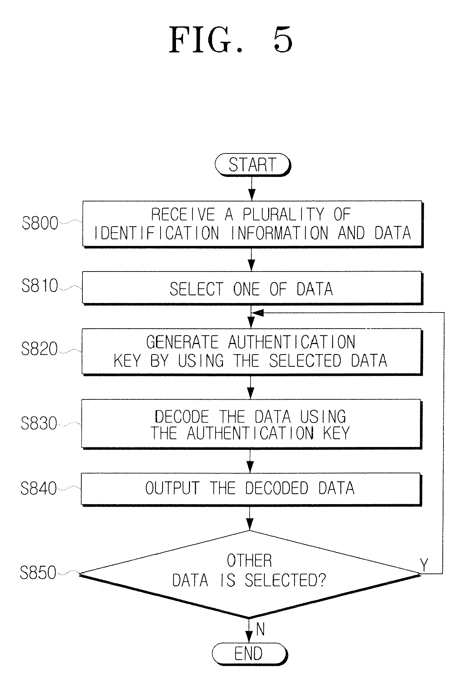

FIG. 5 a flow chart illustrating a digital content receiving method according to another exemplary embodiment of the present invention.

The first receiver 110 and the second receiver 120 respectively receive identification information, that is the DDC signal, and data, that is, the TMDS signal from the digital content transmitting apparatus connected to the receivers (S800).

The switching unit 400 selects one signal from among the TMDS signals received through the first receiver 100 and the second receiver 120 (S810). The switching unit 400 provides the selected TMDS signal to one of the first receiver 110 and the second receiver 120 which receives the DDC signal corresponding to the selected TMDS signal.

The one receiver provided by selecting the switching unit 400 among the first receiver 110 and second receiver 120 generates one authentication key using the received DDC signal (S820). The authentication key generated by the first receiver 110 and the second receiver 120 may be stored on the storage unit 250.

The authentication key stored on the storage unit 250 is input into the decoder 600 through the selector 300, and the TMDS signal is input into the decoder 600 through the TMDS receiver 500. The decoder 600 decodes the input data using the authentication key (S830), and outputs the decoded data (S840).

If other data is selected after the decoded data is output, in other words, the TMDS signal is converted into another signal (S850-Y), the generating the authentication key is repeated using the identification information with the converted data from S820.

If one set of data from among the plurality of data is selected while the authentication keys for the plurality of data are stored, the method for receiving the digital content according to the exemplary embodiment of the FIG. 4 is utilized to decode the data using the pre-stored authentication key and to output the decoded data.

The method for receiving the digital content according to the exemplary embodiment of FIG. 5 is utilized to generate the authentication key of the selected data from among the plurality of the data, to decode the data using the generated authentication key. The authentication key of the selected data is generated when other data is selected.

As described above, the apparatus and method for receiving digital content according to the exemplary embodiments of the present invention comprise HDCP authenticators corresponding in number to the plurality of input ports, so that the time required for the authentication is reduced. As a result, the waiting time for authenticating the respective input signals is reduced, and it is possible to quickly convert the input signal.

Although a few exemplary embodiments of the present invention have been shown and described, it will be appreciated by those skilled in the art that changes may be made to these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital content receiving apparatus (1000, 2000) comprising:
a plurality of receivers (100), which receive identification information and data from a plurality of transmitting apparatus;
a plurality of authenticators(200) which generate authentication keys by using the identification information received through the plurality of receivers; and
a decoder (600) which decodes the data received from the plurality of receivers by using an authentication key of the authentication keys generated by the plurality of authenticators.

2. The digital content receiving apparatus (1000, 2000) of claim 1, wherein the data received from the plurality of receivers (100) comprises one of digital visual interface data and high definition multimedia interface data.

3. The digital content receiving apparatus (1000, 2000) of claim 1 or claim 2, wherein the plurality of authenticators (200) perform high-bandwidth digital content protection authentication.

4. The digital content receiving apparatus (1000, 2000) of any claim preceding, wherein the identification information is received by the receivers (100) through a display data channel line, and the data are received by the receivers through a transition minimized differential signaling line.

5. The digital content receiving apparatus (1000, 2000) of claim 4, wherein the identification information is Extended Display Identification Data.

6. The digital content receiving apparatus (1000, 2000) of claim 4 or claim 5, wherein a total number of the authenticators corresponds to a total number of the receivers.

7. The digital content receiving apparatus (1000) of claim 1 further comprising:
a switching unit (400) which switches data received through the plurality of receivers (100); and
a selector (300) which selects the authentication key from among the authentication keys generated by the plurality of authenticators (200);
wherein the decoder (600) decodes data switched by the switching unit using the authentication key selected by the selector.

8. The digital content receiving apparatus (1000) of claim 7, wherein the selector (300) selects the authentication key from among the authentication keys generated by the plurality of authenticators (200) according to a transition minimized differential signaling signal switched by the switching unit (400).

9. The digital content receiving apparatus (1000) of any one of claims 1, 7 or 8 further comprising:
a storage unit (250) which stores the authentication keys generated by the plurality of authenticators (200).

10. A digital content receiving method comprising:
receiving identification information and data from a plurality of transmitting apparatus (100);
generating authentication keys using the received identification information; and
decoding data of the received data by using an authentication key of the authentication keys which are generated.

11. The digital content receiving method of claim 10, wherein the identification information is received through a display data channel line, and the data is received through a transition minimized differential signaling line.

12. The digital content receiving method of claim 10 or claim 11 further comprising:
selecting data of the received data;
selecting the authentication key from among the authentication keys which are generated;
wherein the decoding decodes the selected data using the selected authentication key.

13. The digital content receiving method of claim 12, wherein the selecting the authentication key selects the authentication key corresponding to the selected data.

14. The digital content receiving method of claim 12, wherein the selecting the authentication key comprises selecting the authentication key from among the authentication keys according to a transition minimized differential signaling signal.

15. The digital content receiving method comprising:
receiving identification information and data;
selecting data of the received data;
generating an authentication key by using the identification information corresponding to the selected data; and
decoding the selected data by using the generated authentication key.

16. The digital content receiving method of claim 15, wherein the identification information is received through a display data channel line, and the data are received through a transition minimized differential signaling line.
